# EUROPÄISCHE PATENTANMELDUNG

(11) **EP 0 709 571 A2**
(43) Veröffentlichungstag der Anmeldung: **01.05.1996**
(21) Anmeldenummer: 95116001.9
(22) Anmeldetag: 11.10.1995
(51) Int. Cl.: F03D 11/00, F03D 7/02

(54) **Für eine lastarme Parkstellung eingerichtete Windkraftanlage**

(30) Priorität: 25.10.1994 DE 4437995
(71) Anmelder: AUTOFLUG ENERGIETECHNIK GmbH + CO., D-25462 Rellingen (DE)
(72) Erfinder: Böhmeke, Georg, D 24768 Rendsburg (DE)
(74) Vertreter: Müller, Karl-Ernst, Dr.

(57) **Zusammenfassung**

Gegenstand der Erfindung ist eine Windkraftanlage mit einem zweiflügeligen Rotor mit verdrehbaren Blattspitzen, welche über die Verdrehung der Blattspitzen in eine lastarme Parkstellung bei auftretenden Windböen überführbar ist.

## Beschreibung

Die Erfindung betrifft eine Windkraftanlage mit einem turmartigen Ständer, auf dem ein mit zwei Rotorblättern versehener Rotor um die Turmachse dreh bar und mittels einer Azimutbremse in einer Arbeitsstellung festsetzbar angeordnet ist, wobei bei wenigstens einem Rotorblatt ein Teil desselben um seine Längsachse verstellbar ist.

Durch Benutzung ist eine Windkraftanlage mit den vorgenannten Merkmalen bekannt, deren Rotor wenigstens ein aus einem feststehenden Grundblatt und einem daran um die Längsachse drehbar angeordneten Blatteil, vorzugsweise Blattspitze bestehendes Rotorblatt aufweist. Die einzelnen Baugruppen derartiger Windkraftanlagen werden im allgemeinen unter Berücksichtigung der Betriebsfestigkeitslasten ebenso wie der Extremlasten dimensioniert. Daher muß eine Reihe von Bauteilen nur aus dem Grund entsprechend groß und schwer ausgelegt sein, um einige seltene extreme Lastfälle zu überstehen. Hierzu zählt eine kräftige Sturmbö auf die bei entsprechenden Windstärken bereits ausgeschaltete Anlage, insbesondere das Auftreten der sogenannten 50-Jahresbö mit einer angenommenen Windgeschwindigkeit von ungefähr 67 m/Sekunde.

Der Erfindung liegt die Aufgabe zugrunde, eine Windkraftanlage mit den eingangs genannten Merkmalen derart auszubilden und in einer lastarmen Parkstellung einzurichten, daß die Belastung der Windkraftanlage bei Auftreten einer starken Windbö verringert ist.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Ein erstes Ausführungsbeispiel der Erfindung sieht vor, daß zur Überführung und Positionierung der Windkraftanlage in eine bei Auftreten einer starken Windbö lastarmen Parkstellung bei in einer auf die Turmachse bezogenen waagerechten Stellung festgesetzten Rotorblättern das erste Rotorblatt in seine vom Wind beaufschlagte Arbeitsstellung gestellt und das zweite Rotorblatt mit seinem beweglichen Teil um seine Längsachse in den Wind gedreht ist und daß die den Rotor bezüglich der Turmachse festsetzende Azimutbremse freigegeben ist. Mit dieser Ausführungsform der Erfindung ist der Vorteil verbunden, daß der gesamte Rotor sich bei abgeschalteter Windkraftanlage ohne Fremdenergie im Wind ausrichtet beziehungsweise in den Wind dreht, weil das eine Rotorblatt in Arbeitsstellung, das zweite Rotorblatt aber mit einer verdrehten Blattspitze in Sturmstellung steht, so daß bei einer entsprechenden Windstärke nur das eine vor dem Wind stehende Rotorblatt vom Wind beaufschlagt wird und ein Drehmoment auf den Rotor um die Turmachse ausübt, während das andere in den Wind gedrehte Rotorblatt dem Wind keinen Widerstand entgegensetzt. Aus diesem Grunde dreht sich der Rotor selbsttätig mit in Längsrichtung zum Wind stehenden Rototblättern in den Wind und bedarf keiner aktiven Nachführung. Ist der Rotor in den Wind gedreht, so liegt die Belastung eines derart dann vom Wind längsangeströmten Rotors aufgrund der verminderten Windangriffsflächen deutlich geringer, und die durch die spezielle Parkstellung verminderten Lasten führen zu entsprechenden Einsparungen bei der Auslegung von Rotorblatt, Gondel und Turm.

Eine zweite Ausführungsform der Erfindung sieht vor, daß beide Rotorblätter jeweils einen um ihre Längsachse frei drehbar angeordneten und in einer Arbeitsstellung arretierbaren Teil aufweisen und daß zur Überführung und Positionierung der Windkraftanlage in einer bei Auftreten einer starken Windbö lastarmen Parkstellung beide beweglichen Rotorblatteile freigegeben und der Rotor bezüglich der Turmachse in einer Stellung vor dem Wind mittels der Azimutbremse festgesetzt ist. Somit werden bei einem zielgebremsten Rotor die verdrehbaren Blattspitzen beider Rotorblätter zum Auswehen freigegeben, so daß sich die frei drehbaren Blattspitzen der Windströmung anpassen und sich selbsttätig auf die geringeren Luftkräfte einstellen, so daß die jeweiligen Rotorblätter von größeren Biege- und Drehmomenten frei bleiben. Auch mit dieser Ausführungsform ist der Vorteil verbunden, daß die betroffenen Teile der Windkraftanlage entsprechend leichter und damit kostengünstiger ausgelegt werden können.

Nach einem Ausführungsbeispiel der Erfindung ist vorgesehen, daß die Rotorblätter mit einer Winkelabweichung in der auf die Turmachse bezogenen waagerechten Stellung festsetzbar sind, wobei diese Winkelabweichung nach einem Ausführungsbeispiel der Erfindung zwischen 7 und 13 Grad betragen kann.

Soweit beim ersten Ausführungsbeispiel der Erfindung die Azimutbremse für die Festsetzung des Rotors auf der Turmachse freigegeben ist, kann nach einem Ausführungsbeispiel der Erfindung vorgesehen sein, daß nach Festsetzen der Azimutbremse die Azimutbremse mit einem federvorgespannten Anteil bezüglich der Bremsung der Drehbewegung des Rotors um die Turmachse mit einem federvorgespannten Anteil wirksam ist; auf diese Weise ist gewährleistet, daß der Rotor dem auf ihn ausgeübten Drehmoment einen gewissen Widerstand beim Nachführen in seine in den Wind gedrehte Stellung entgegensetzt, um Schwingungen zu vermeiden.

In der Zeichnung sind Ausführungsbeispiele der Erfindung wiedergegeben, welche nachstehend beschrieben sind. Es zeigen:
- Fig. 1: eine Windkraftanlage in schematischer Darstellung in der lastarmen Parkstellung,
- Fig. 2: eine Windkraftanlage gemäß Figur 1 in einer anderen Ausführungsform,
- Fig. 3: den Gegenstand der Figur 2 in Seitenansicht.

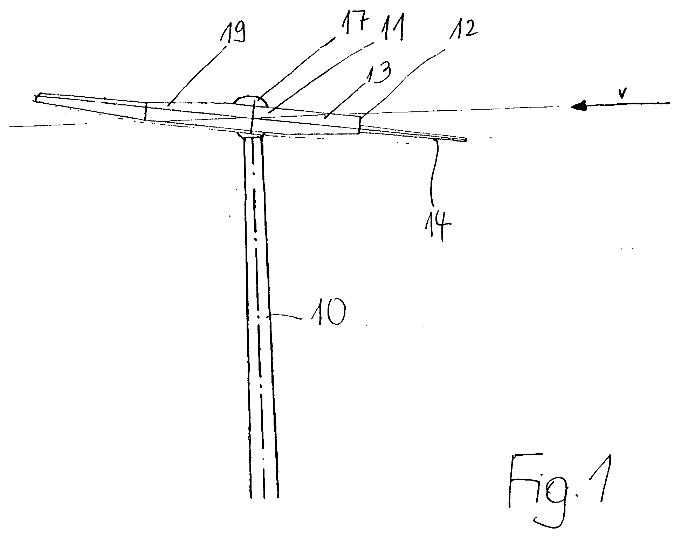

Bei dem aus Figur 1 ersichtlichen Ausführungsbeispiel trägt ein Turm 10 einer Windkraftanlage einen Rotor 11, der über eine Rotorhalterung an einer Gondel 17 drehbar gelagert und gehalten ist, wobei in der Gondel 17 der Generator für die Stromerzeugung untergebracht ist.

Der Rotor 11 hat ein erstes Rotorblatt 19, welches über seine Längsachse einen durchgehenden und festen Körper ausbildet. Das zweite Rotorblatt 12 des Rotors 11 besteht aus einem feststehenden Grundblatt 13 und einer daran drehbar angeordneten Blattspitze 14, wobei der Mechanismus zur Verdrehung der Blattspitze nicht weiter dargestellt ist.

Die in Figur 1 dargestellte Windkraftanlage befindet sich bereits in der lastarmen Parkstellung, bei welcher der Rotor 12 in den Wind gedreht ist und damit dem mit Pfeil V angedeuteten Wind keinen Widerstand entgegensetzt. Das Herbeiführen dieser Stellung ist derart geschehen, daß der zunächst vor dem Wind stehende Rotor 11 in einer Stellung festgesetzt worden ist, in welcher die beiden Rotorblätter 12, 19 mit einer gewissen Winkelabweichung zur auf die Turmachse bezogenen Waagerechten stehen. Gleichzeitig ist die drehbare Blattspitze 14 des zweiten Rotorblatts 12 in den Wind gedreht. Der auf den vor dem Wind stehenden Rotor einwirkende Wind übt nun über das zweite Rotorblatt 19 ein Drehmoment auf den Rotor 12 um die Turmachse aus, wobei auf der anderen Seite des Rotors ein solches Moment im Bereich des zweiten Rotorblatts 12 nicht wirkt. Damit dreht sich bei gelöster Azimutbremse der Rotor 12 selbsttätig, das heißt ohne aktive Nachführung in den Wind, damit in die aus Figur 1 ersichtliche Stellung, in welcher der Wind keine große Belastung auf die mit in Längsrichtung zum Wind ausgerichteten Rotorblättern stehende Windkraftanlage ausübt. Auch bei abgeschalteter Azimutbremse sorgt deren federvorgespannter Anteil noch dafür, daß die selbsttätige Drehbewegung des Rotors 11 nicht zu heftig ist und zu einem Überschlag über die gewünschte Stellung führt.

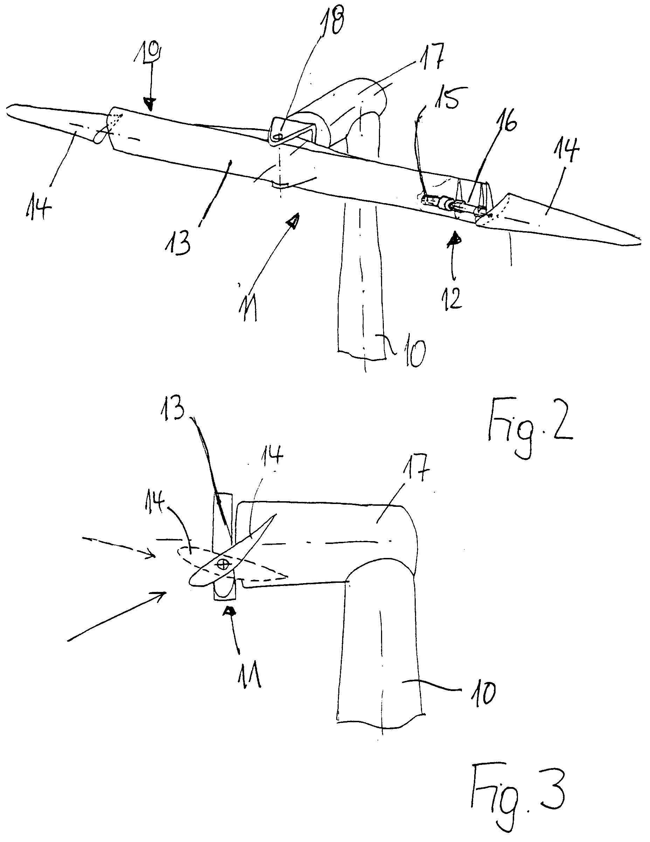

Bei dem aus den Figuren 2 und 3 ersichtlichen Ausführungsbeispiel sind nun beide Rotorblätter 12, 19 des Rotors 11 mit entsprechend gegenüber dem feststehenden Grundblatt 13 versehenen Blattspitzen 14 versehen, wobei hinsichtlich des Rotorblatts 12 ein Antrieb 15 für die Verstellung der Blattspitze im Betrieb der Windkraftanlage angedeutet ist; der Antrieb 15 ist mit der Blattspitze 14 über eine Achse 16 verbunden, die in dem gewünschten Fall die freie Drehbarkeit der Blattspitze 14 im Verhältnis zum feststehenden Grundblatt 13 des Rotors 12, 19 gewährleistet. Der Rotor 11 ist an der Gondel 17 bei dem dargestellten Ausführungsbeispiel über eine vereinfacht dargestellte Halterung 18 gehalten. Wie sich aus Figur 3 ergibt, stellen sich nach Freigabe der Blattspitzen 14 diese von selbst entsprechend der Windanströmung ein, wodurch gewährleistet ist, daß nach Freigabe der Blattspitzen 14 zum Auswehen die auf den Rotor 11 wirkende Belastung durch den Wind entsprechend verringert ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Windkraftanlage mit einem turmartigen Ständer, auf dem ein mit zwei Rotorblättern versehener Rotor um die Turmachse drehbar und mittels einer Azimutbremse in einer Arbeitsstellung festsetzbar angeordnet ist, wobei bei wenigstens einem Rotorblatt ein Teil desselben um seine Längsachse verstellbar ist, dadurch gekennzeichnet, daß zur Überführung und Positionierung der Windkraftanlage in eine bei Auftreten einer starken Windbö lastarmen Parkstellung bei in einer auf die Turmachse bezogenen waagerechten Stellung festgesetzten Rotorblättern (12, 19) das erste Rotorblatt (19) in seine vom Wind beaufschlagte Arbeitsstellung gestellt und das zweite Rotorblatt (12) mit seinem beweglichen Teil (14) um seine Längsachse in den Wind gedreht ist und daß die den Rotor (11) bezüglich der Turmachse festsetzende Azimutbremse freigegeben ist.

2. Windkraftanlage mit einem turmartigen Ständer, auf dem ein mit zwei Rotorblättern versehener Rotor um die Turmachse dreh bar und mittels einer Azimutbremse in einer Arbeitsstellung festsetzbar angeordnet ist, wobei bei wenigstens einem Rotorblatt ein Teil desselben um seine Längsachse verstellbar ist, dadurch gekennzeichnet, daß beide Rotorblätter (12, 19) jeweils einen um ihre Längsachse frei dreh bar angeordneten und in einer Arbeitsstellung arretierbaren Teil (14) aufweisen und daß zur Überführung und Positionierung der Windkraftanlage in einer bei Auftreten einer starken Windbö lastarmen Parkstellung beide beweglichen Rotorblatteile (14) freigegeben und der Rotor (11) bezüglich der Turmachse in einer Stellung vor dem Wind mittels der Azimutbremse festgesetzt ist.

3. Windkraftanlage nach Anspruch 1 oder 2, dadurch gekennzeichnet, daß die Rotorblätter (12, 19) mit einer Winkelabweichung in der auf die Turmachse bezogenen waagerechten Stellung feststellbar sind.

4. Windkraftanlage nach Anspruch 3, dadurch gekennzeichnet, daß die Winkelabweichung 7 bis 13 Grad beträgt.

5. Windkraftanlage nach Anspruch 1 und Anspruch 3 oder 4, dadurch gekennzeichnet, daß nach Festsetzen der Azimutbremse die Azimutbremse mit einem federvorgespannten Anteil bezüglich der Bremsung der Drehbewegung des Rotors (11) um die Turmachse mit einem federvorgespannten Anteil wirksam ist.
